(19) Europäisches Patentamt
European Patent Office
Office européen des brevets

(11) **EP 2 783 243 B1**

(12) **EUROPEAN PATENT SPECIFICATION**

(45) Date of publication and mention
of the grant of the patent:
**10.05.2017 Bulletin 2017/19**

(51) Int Cl.:
***G01N 23/08*** *(2006.01)*   *G01N 21/01* *(2006.01)*
*G01J 3/28* *(2006.01)*

(21) Application number: **12808864.8**

(22) Date of filing: **23.11.2012**

(86) International application number:
**PCT/GB2012/052908**

(87) International publication number:
**WO 2013/076504 (30.05.2013 Gazette 2013/22)**

(54) **DETECTOR APPARATUS AND METHOD**

DETEKTOR UND VERFAHREN

APPAREIL DE DÉTECTEUR ET PROCÉDÉ ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.11.2011 GB 201120165**

(43) Date of publication of application:
**01.10.2014 Bulletin 2014/40**

(73) Proprietor: **Kromek Limited**
**Sedgefield, Durham TS21 3FD (GB)**

(72) Inventors:
• **SNOW, Stephen Whitaker**
**Hope Valley**
**Derbyshire S33 7ZL (GB)**
• **RADLEY, Ian**
**Sedgefield**
**Durham TS21 3FD (GB)**

(74) Representative: **Wilson, Peter et al**
**Murgitroyd & Company**
**Scotland House**
**165-169 Scotland Street**
**Glasgow G5 8PL (GB)**

(56) References cited:
**WO-A1-2005/116691    WO-A2-2009/082587**

• BERENSTEIN C A ET AL: "EXACT DECONVOLUTION FOR MULTIPLE CONVOLUTION OPERATORS-AN OVERVIEW, PLUS PERFORMANCE CHARACTERIZATIONS FOR IMAGING SENSORS", PROCEEDINGS OF THE IEEE, IEEE. NEW YORK, US, vol. 78, no. 4, 1 April 1990 (1990-04-01), pages 723-734, XP000138461, ISSN: 0018-9219, DOI: 10.1109/5.54810
• WELLER R A ET AL: "Bayesian techniques and the principle of maximum entropy in ion-beam analysis applications", NUCLEAR INSTRUMENTS & METHODS IN PHYSICS RESEARCH, SECTION - B:BEAM INTERACTIONS WITH MATERIALS AND ATOMS, ELSEVIER, AMSTERDAM, NL, vol. 136-138, 1 March 1998 (1998-03-01), pages 1146-1151, XP004140492, ISSN: 0168-583X, DOI: 10.1016/S0168-583X(97)00806-9
• ENGDAHL J C ET AL: "Semi-Analytical Response Function for ML-EM Deconvolution of NaI Detector Energy Spectra", NUCLEAR SCIENCE SYMPOSIUM CONFERENCE RECORD, 2005 IEEE WYNDHAM EL CONQUISTADOR RESORT, PUERTO RICO OCTOBER 23 - 29, 2005, PISCATAWAY, NJ, USA,IEEE, vol. 3, 23 October 2005 (2005-10-23), pages 1346-1350, XP010895827, DOI: 10.1109/NSSMIC.2005.1596569 ISBN: 978-0-7803-9221-2

EP 2 783 243 B1

- **WEIYI WANG ET AL: "Maximum likelihood estimation maximization deconvolution in spatial and combined spatial energy domains for a detector array system", NUCLEAR SCIENCE SYMPOSIUM CONFERENCE RECORD, 2007. NSS '07. IEEE, IEEE, PI, 1 October 2007 (2007-10-01), pages 1965-1970, XP031206044, DOI: 10.1109/NSSMIC.2007.4436539 ISBN: 978-1-4244-0922-8**
- **SIEVERS P ET AL: "Improving the spectral resolution of a highly pixelated detector by applying a pixel-by-pixel energy calibration for investigating the spectral properties of the anode heel effect", JOURNAL OF INSTRUMENTATION, INSTITUTE OF PHYSICS PUBLISHING, BRISTOL, GB, vol. 7, no. 7, 9 July 2012 (2012-07-09), page P07011, XP020226631, ISSN: 1748-0221, DOI: 10.1088/1748-0221/7/07/P07011**
- **SIEVERS P ET AL: "Bayesian deconvolution as a method for the spectroscopy of X-rays with highly pixelated photon counting detectors", JOURNAL OF INSTRUMENTATION, INSTITUTE OF PHYSICS PUBLISHING, BRISTOL, GB, vol. 7, no. 3, 9 March 2012 (2012-03-09), page P03003, XP020220436, ISSN: 1748-0221, DOI: 10.1088/1748-0221/7/03/P03003**

**Description**

The invention relates to a method and apparatus for combining spectral data from a plurality of radiation detectors. The invention is in particular a method and apparatus for combining spectral data from a plurality of radiation detectors of at least two different types/ having at least two different response properties, and in particular from a plurality of radiation detectors having at least two different energy resolutions and/ or of different efficiency.

The invention in particular relates to a method and apparatus making use spectral data from high energy ionizing radiation such as x-rays or gamma-rays emergent from an object where it is desirable to gain information about the particular radioactive isotopes that may be present.

The invention in particular relates to a method and apparatus for combining spectral data from at least one first detector with a relatively higher energy resolution but a relatively lower absolute efficiency and at least one second detector with a relatively lower energy resolution but a relatively higher absolute efficiency.

The use of radiation detectors of various types for the detection of ionizing radiation is well known. The value of resolving data spectrally is also known. For example, it is known that it is possible to identify particular radioactive isotopes from their characteristic spectra. There are many circumstances where identification of the presence of a particular isotope from a radioactive source or from a material contaminated by a radioactive source might be of value. It is also known that when a target object is scanned by high energy ionizing radiation the spectroscopic information from emergent radiation could be used to give information about the material content of the target object. It is known for example that the x-ray absorption properties of any material can vary spectroscopically. This has led to development of detectors which are capable of spectrally resolving emergent radiation whether from a radioactive source or from a contaminated object or from an object subject to external irradiation.

For spectroscopic ionizing radiation detection and measurement, performance is limited by various traits of the detector. In particular a given detector has as fundamental properties a detection efficiency and an energy resolution. The detector's efficiency is limited by its size and by the intrinsic efficiency of the detector material used. The detector material also dictates its energy resolution.

For practical applications material cost and size are determining factors in detector material choice. Size is limited by mechanical and manufacturing constraints and may be further limited by application (for example if portability is desired). Practical detector devices may represent a trade off between cost and size, and between efficiency and energy resolution.

It is recognised that the efficiency of a system could be improved by adding more detectors to the system. Conventionally, this has been done using detectors of the same type. The measured spectra of such like detectors can be combined by simple summation subject to common calibration.

Hybrid detector systems for example including detector elements with a relatively higher energy resolution but a relatively lower absolute efficiency and detector elements with a relatively lower energy resolution but a relatively higher absolute efficiency might in principle represent an effective solution that allows the weaknesses of each detector element to be offset by their complementary strengths. However the simple summation approach is not appropriate when combining different types of detectors with very different peak response functions.

International Patent Publication WO2009/082587 considers a hybrid detector system in which one or more high efficiency/ low resolution detectors are combined with one or more low efficiency/ high resolution detectors and in which a particular method is applied to combine spectral data from the detectors of these two different types.

As described in WO2009/082587 a baseline estimation is performed on each acquired spectrum to separate the measured peak response from the underlying continuum. The resulting peak spectra are all rebinned to a common energy calibration. Then the peak spectra are multiplied by channel number to yield a convolution spectrum. Counts in each peak spectrum channel are then redistributed to match the local convolution spectrum distribution with a window width set according to the respective detector local characteristic peak width. The final spectrum is the summation of all the redistributed peak spectra.

The method gives some co-operably produced aspect to the data, but the information that is derived is limited. Fundamentally, plural spectra are generated as accumulating histograms in an essentially conventional manner, and peaks are then identified in the plural spectra separately by separating out the underlying continuum. The multiplication step as a result yields a relatively crude convolution that in particular does not fully exploit the complementary strengths/ mitigate the weaknesses of the plural detector types.

Methods for processing radiation data numerically are know, including for example the following.

BERENSTEIN C A ET AL, "EXACT DECONVOLUTION FOR MULTIPLE CONVOLUTION OPERATORS-AN OVERVIEW, PLUS PERFORMANCE CHARACTERIZATIONS FOR IMAGING SENSORS", PROCEEDINGS OF THE IEEE, IEEE. NEW YORK, US, (19900401), vol. 78, no. 4, doi:10.1109/5.54810, ISSN 0018-9219, PAGE 723 - 734.

WELLER R A ET AL, "Bayesian techniques and the principle of maximum entropy in ion-beam analysis applications", NUCLEAR INSTRUMENTS & METHODS IN PHYSICS RESEARCH, SECTION - B:BEAM INTERACTIONS WITH    MATERIALS    AND    ATOMS,    ELSEVIER,    AMSTERDAM,    NL,    (19980301),    vol.    136-138, doi:10.1016/S0168-583X(97)00806-9, ISSN 0168-583X, PAGE 1146 - 1151.

ENGDAHL J C ET AL, "Semi-Analytical Response Function for ML-EM Deconvolution of NaI Detector Energy Spectra", NUCLEAR SCIENCE SYMPOSIUM CONFERENCE RECORD, 2005 IEEE WYNDHAM EL CONQUISTADOR RESORT, PUERTO RICO OCTOBER 23 - 29, 2005, PISCATAWAY, NJ, USA,IEEE, (20051023), vol. 3, doi:10.1109/NSSMIC.2005.1596569, ISBN 978-0-7803-9221-2, PAGE 1346 - 1350.

WEIYI WANG ET AL, "Maximum likelihood estimation maximization deconvolution in spatial and combined spatial energy domains for a detector array system", NUCLEAR SCIENCE SYMPOSIUM CONFERENCE RECORD, 2007. NSS '07. IEEE, IEEE, PI, (20071001), doi:10.1109/NSSMIC.2007.4436539, ISBN 978-1-4244-0922-8, PAGE 1965 - 1970.

It is desirable to develop a method and apparatus based on an alternative method for the convolved processing of spectral data from a plurality of radiation detectors that is able to accommodate differences in response properties between the detectors.

It is in particular desirable to develop a method and apparatus based on an alternative method for the convolved processing of spectral data from a plurality of radiation detectors with at least two different known response properties, and in particular from a plurality of radiation detectors having at least two different energy resolutions and/ or of different efficiency, that mitigates at least some of the disadvantages of prior art methods and/ or that more effectively exploits the complementary spectral data content provided by the at least two different detector responses.

It is in particular desirable to develop a method and apparatus that is better able to make use of spectral data from high energy ionizing radiation such as x-rays or gamma-rays emergent from an object where it is desirable to gain information about the particular radioactive isotopes that may be present

Thus, in accordance with the invention in a first most general aspect:

a method is provided for the combined processing of spectral data from a plurality of radiation detectors, the method comprising:

obtaining a response matrix for each detector;
collecting data from radiation incident at each detector;
producing a spectral histogram for the collected data from each detector;
deconvoluting the histograms from each detector by applying a numerical deconvolution that makes use of the response matrix for each detector to derive a single spectral histogram that representatively combines information from the plurality of detectors.

The invention is applied to data from a plurality of radiation detectors in such manner as to be able to accommodate differences in response properties between the detectors. The invention is in particular preferably applied to data from at least two detectors having at least two different known response properties, for example in that their response functions are known, previously measured, or determined in a calibration step. The invention in particular may comprise a step of collecting data from radiation incident on at least one first detector and at least one second detector, the first and second detectors having different response properties, and subsequent steps of producing a spectral histogram for the collected data from each detector and deconvoluting the histograms from each detector by applying a suitable numerical deconvolution that makes use of the response matrix for each detector to derive a single spectral histogram that representatively combines information from the plurality of detectors.

The method is thus a method for combining spectral data from a plurality of radiation detectors and in particular is a method that can be applied to data from a plurality of radiation detectors having at least two different known response properties. In a particular case, the method combines spectral data from a plurality of radiation detectors having at least two different energy resolutions and/ or of different efficiency. In a preferred case thus the first and second detectors have different energy resolutions and/ or different efficiency. In the preferred case, the method is thus a method for the processing of spectral data from a hybrid detector system having at least two different response properties.

The method is distinctly characterized by the use of a the response matrix for each detector within the deconvolution step to combine data from the plural radiation detectors in a manner which enables spectral data content provided by the plural detectors exhibiting at least two different detector responses to be combined in a simple but effective complementary manner. Each detector is separately addressable and data regarding incident radiation is collected separately therefrom to produce a spectral histogram for the detector, with the data then being combined via the suitable deconvolution method.

A suitable numerical deconvolution method is for example an iterative and/ or convergent deconvolution method, and is in a particular embodiment a Bayesian deconvolution method. It is distinctively characterised by the use of the respective detector response matrices within the numerical method and for example used as or to derive an initial condition for the iteration and for example used as or to derive a Bayesian prior.

In a possible implementation of the method, the method thus comprises in an initial step obtaining a response matrix for each detector, and in a deconvolution step deconvoluting the histograms from each detector by applying a Bayesian deconvolution which makes use of the respective detector response matrices. In a particular case the respective detector response matrices are used to derive the prior for the Bayesian deconvolution. They may be used to derive the prior directly for example by being applied directly for example as a weighting factor, or they may be used to derive the prior otherwise indirectly.

Where used herein, a response matrix for a detector is defined as a matrix which transforms detector system input to detector system output across a range of possible interactions, and for example across a substantial part of the possible breadth of the range of possible interactions. Measured response matrices may be used. However in the preferred case a response matrix is simulated and for example is generated by a Monte Carlo simulation or like method. In a possible case a GEANT4 simulation is used.

A previously obtained response matrix may for example be stored for subsequent use in a deconvolution step of the method applied to subsequently collected data, and/ or may be obtained and for example generated as an initial step of an implementation of the method.

As such the method can be contrasted with the method described in WO2009/082587 for the co-processing of data from the radiation detectors of a hybrid system having at least two different response properties. For example, it can be seen in the method of WO2009/082587 that the first step after obtaining accumulation histograms is to separate the peaks from the underlying continuum. The step is performed for each individual detector used and is performed prior to combination of the information. In order to perform this step it is necessary already to have enough statistics to see the peaks in the responses of all the individual detectors and this makes the combining of information of less value. The strength of the combined deconvolution method of the present invention when contrasted with this prior art approach is that it first combines information from all the detectors without requiring any assumptions to be made about peaks in the individual spectra, leaving the decision about what peaks (if any) are present to be made using the combined information.

Thus, in the preferred case, the method comprises the processing of data from a plurality of detector responses to derive a spectrum more representative of a notional true spectrum, and in particular to identify spectral peaks therein, than that which would be derived from a single detector response, and in particular by separately identifying the spectral peaks therein. Peaks in a spectrum from a single detector response need not be separately identified. The method may produce a useable spectrum and in particular identified spectral peaks therein which could not so effectively be identified by an analysis that required determination of peaks in a spectrum from each single detector response separately.

The data from the plural radiation detectors, for example having at least two different known response properties, is preferably processed simultaneously/ closely successively to derive a spectrum more representative of a notional true spectrum than that which would be derived from a single detector response.

In a particular preferred case the Bayesian or other numerical deconvolution method step is performed repeatedly and successively in iterative manner with respect to data from the radiation detectors having at least two different response properties to approach in iterative manner a derived spectrum more representative of a nominal true spectrum than that which would be derived from a single detector response.

The method thus comprises the use of a Bayesian or other numerical deconvolution to produce a single spectral histogram that representatively combines information from the plurality of detectors, in particular to be more representative of a nominal true spectrum than that which would be derived from a single detector response.

An example method for performance of a Bayesian analysis of the collected data from each detector, by deconvoluting the histograms from each detector to derive a single spectral histogram, is discussed in more detail below.

It is a particular advantage of the method of the invention that the derived single spectral histogram may be made available for a range of conventional further processing and analysis steps.

For example, one or more of the following steps may be performed:

optionally, displaying the single histogram;
optionally, comparing the peaks in the single histogram with levels that define the statistical significance of their height relative to the continuum background; optionally, integrating the area of peaks in the single histogram and using this as input to a calculation of source activity.

For example a possible further processing and analysis step may comprises determining from the single derived histogram the presence of one or more spectral features such as peaks characteristic of the spectrum of one or more particular radioactive isotopes and thereby identifying the presence of a contribution from one or more particular radioactive isotopes in the derived histogram. The method thus allows inferences to be drawn about the particular radioactive isotopes producing a collected signal, from which may be drawn inferences about the particular radioactive isotopes present in a test object.

The method may thus comprise a step of collecting emitted radiation data from an object under test.

In a possible more complete aspect of the invention, it follows that the method is a method of collecting and analysing emitted radiation data from an object under test, and comprises the steps of:

providing a radiation detector system comprising a plurality of detectors;
positioning an object relative to the radiation detector system in such arrangement that radiation emergent from the object is caused to be incident upon the plurality of detectors;
collecting data from radiation so incident at each detector and performing the analysis hereinbefore described.

In a possible implementation of the method as above, the method comprises in an initial step obtaining a response matrix for each detector, and in a deconvolution step deconvoluting the histograms from each detector by applying a deconvolution such as a Bayesian deconvolution which makes use of the respective detector response matrices.

In such a case in a possible implementation of the method of collecting and analysing emitted radiation data from an object under test, the method is applied to a radiation detector system for which a response matrix for each detector has been previously obtained for use in the deconvolution step and/ or the method comprises the step of obtaining a response matrix for each detector for use in the deconvolution step prior to implementing the foregoing steps on one or more objects under test.

A previously obtained response matrix may for example be stored by the apparatus for use in a deconvolution step of the method applied to subsequently collected radiation emergent from on one or more objects under test. Alternatively a response matrix may be obtained in an initial step prior to implementation of the foregoing steps on an object under test.

An object under test may be any object from which radiation is emerging, whether after transmission or other interaction with incident radiation, or emitted by the object by a radiative process, and where a spectral analysis of the emergent radiation is desirable. An object under test may for example be an object that is emitting radiation and where a spectral analysis of the emitted radiation is desirable. In a particularly convenient case the object is radioactive source, whether being an intended radioactive source or an object secondarily contaminated by a source of radiation, and the method is a method of collecting and analysing emitted radiation data from the radioactive source.

In a convenient case the method is applied to identify the presence of or characterise a contribution in the collected data of one or more particular radioactive isotopes from their characteristic spectra, and thus draw inferences about the composition of the source. The method comprises the steps above described performed so as to isolate and identify the presence or absence of one or more predetermined characteristic spectral features such as predetermined characteristic peaks of at least one particular radioactive isotope and so identify the presence of the at least one particular radioactive isotope in the radioactive source. Reference may for example be made to a suitable data register of stored predetermined characteristic spectral features of particular radioactive isotopes, whether stored on or in association with a detector device or in a separately and for example remotely addressable database.

However the invention does not exclude application in a system which involves the irradiation of a target object from an external source.

In such a possible more complete embodiment, the method is a method of collecting and analysing radiation interaction data from a target object, for example to obtain information about its composition and/ or contents, and comprises the steps of: providing a radiation source and a radiation detector system comprising a plurality of detectors; positioning an object relative to the radiation source and the radiation detector system in such arrangement that radiation from the source is cased to be incident upon the plurality of detectors after a radiation interaction with the object; collecting data from radiation so incident at each detector and performing the analysis hereinbefore described.

Again, in each case the invention is applied to data from a plurality of radiation detectors in such manner as to be able to accommodate differences in response properties between the detectors and is in particular preferably applied to data from at least two detectors having at least two different known response properties, for example having at least two different energy resolutions and/ or of different efficiency.

In a further aspect of the invention, a detector system for the processing of data derived from incident radiation comprises:

a plurality of separately addressable radiation detectors;
a processing device comprising:

a collection module to collect data from radiation incident at each detector and produce a spectral histogram for the collected data from each detector;
a deconvolution module to deconvolve the histograms from each detector by applying a numerical deconvolution that makes use of a response matrix for each detector to derive a single spectral histogram that representatively combines information from the plurality of detectors.

Preferably the detector system comprises a plurality of radiation detectors having at least two different response properties.

Preferably the detector system comprises a plurality of radiation detectors having at least two different energy resolutions and/ or of different efficiency.

Preferably, the deconvolution module is adapted to apply a deconvolution algorithm comprising for example an iterative and/ or convergent deconvolution method, and in a particular embodiment a Bayesian deconvolution method. The deconvolution module is adapted to apply a deconvolution algorithm that makes use of the respective detector response matrices and for example uses the respective detector response matrices as or to derive an initial condition for the iteration and for example uses the respective detector response matrices as or to derive a Bayesian prior.

The system is thus in the preferred case a system for the performance of a method of the first aspect of the invention, and preferred features of the method of the first aspect of the invention such as are identified hereinabove or below will apply by analogy to the system and vice versa.

In particular in this regard, the processing device may comprise additional modules adapted to perform any of the steps of the processing method described in respect of the first aspect of the invention and/ or data storage modules to store the results of any of the steps of the processing method for subsequent output or used in subsequent steps.

For example in this regard the method may comprise in an initial step obtaining a response matrix for each detector, and in a deconvolution step deconvoluting the histograms from each detector by applying a Bayesian deconvolution which makes use of the respective detector response matrices. The processing device may comprise modules adapted to perform such a deconvolution step and/ or to derive and/ or store a response matrix for each detector. The processing device may in particular comprise a module to derive and/ or store a response matrix for each detector, and a data link to enable the convolution module to apply the derived and/ or stored response matrix to be applied in the deconvolution step to derive a single spectral histogram that representatively combines information from the plurality of detectors.

In a particular case the respective detector response matrices are used to derive the prior for the Bayesian deconvolution. They may be used to derive the prior directly for example by being applied directly for example as a weighting factor, or they may be used to derive the prior otherwise indirectly. The processing device may comprise additional modules adapted to perform such steps of the processing method and/ or to store the results of such steps for subsequent output or use in subsequent steps.

A response matrix may for example be stored by the apparatus for use in a deconvolution step of the method applied to subsequently collected radiation, for example from on one or more objects under test.

Optionally the detector system comprises a spectrum storage register to store the derived spectral histogram and/ or a display to display the derived spectral histogram and/ or further data processing means to process the derived spectral histogram, for example to determine peaks therein. For example a detector system may comprise a peak discriminator to compare the peaks in the derived single histogram with levels that define the statistical significance of their height relative to the continuum background. For example a detector system may comprise a peak integrator adapted to integrate the area of peaks in the derived single histogram and use this as input to a calculation of source activity.

Optionally the detector system is a system for the testing of an object under test that is emitting radiation and where a spectral analysis of the emitted radiation is desirable. In a particularly convenient case the object is radioactive source and the system is a system for collecting and analysing of emitted radiation data from the radioactive source.

Optionally the detector system comprises a sample holder to retain a sample object for testing in appropriate juxtaposition relative to the plurality of radiation detectors.

Preferably the detector system is adapted to identify the presence of or characterise a contribution of one or more particular radioactive isotopes present in the collected data from their characteristic spectra, and comprises an identification module to isolate and identify the presence or absence of one or more predetermined characteristic spectral features of at least one particular radioactive isotope and so identify a contribution from the at least one particular radioactive isotope in the collected data. In this manner the detector system is adapted to identify the presence of or characterise one or more particular radioactive isotopes present in the source.

To perform the identification the detector system may make reference to a suitable data register of stored predetermined characteristic spectral features of particular radioactive isotopes. The detector system may include such a data register and or may include a data communication means to communicate remotely with such a data register.

In a possible embodiment, the detector system comprises a compact and self contained system adapted for portable use for example in situ in the field.

A suitable portable system comprises a plurality of separately addressable radiation detectors as above described and a processing device as above described associated together in compact manner, for example within a common casing.

Preferably the portable system is a hybrid detector system comprising, for example within the common casing, a plurality of radiation detectors having at least two different response properties and for example having at least two different energy resolutions and/ or of different efficiencies.

Conveniently the processing device of the portable system comprises, for example within the common casing, some or all of: a collection module; a deconvolution module; a spectrum storage register; a display; data processing means to process the derived spectral histogram, for example to determine peaks therein; an identification module; a data register; or any other system module as above described.

However, a portable system is merely an example. The invention is also applicable to systems which are not a compact and self contained system adapted for portable use for example with components associated together in compact manner within a common casing.

Preferred features above described may be applicable in both types of system.

In a further aspect of the invention, a computer program product is provided comprising, for example on a computer readable medium or a suitably programmed programmable data processing apparatus, a series of program instructions to execute a series of method steps for the combined processing of spectral data from a plurality of radiation detectors, the method steps comprising:

producing a spectral histogram for incident radiation data collected from each of the plurality of radiation detectors; deconvoluting the histograms from each detector by applying a numerical deconvolution such as a Bayesian deconvolution that makes use of a response matrix for each detector to derive a single spectral histogram that representatively combines information from the plurality of detectors.

The computer program product is in the preferred case a product for the performance of a method of the first aspect of the invention on a suitably programmed computer, and preferred features of the method of the first aspect of the invention such as are identified hereinabove or below will apply by analogy.

In particular in this regard, a series of programme instructions may comprise additional program instructions to execute any of the steps of the processing method described in respect of the first aspect of the invention.

It will be understood generally that any numerical or other data processing step in the method of the invention can be implemented by a suitable set of machine readable instructions or code. These machine readable instructions may be loaded onto a general purpose computer, special purpose computer, or other programmable data processing apparatus to produce a means for implementing the step specified.

These machine readable instructions may be stored in a computer readable medium that can direct a computer or other programmable data processing apparatus to function in a particular manner, such that the instructions stored in a computer readable medium produce an article of manufacture including instruction means to implement some or all of the numerical steps in the method of the invention. Computer program instructions may also be loaded onto a computer or other programmable apparatus to produce a machine capable of implementing a computer executed process such that the instructions are executed on the computer or other programmable apparatus providing steps for implementing some or all of the data processing steps in the method of the invention.

It will be understood that a step can be implemented by, and a means of the apparatus for performing such a step composed in, any suitable combinations of special purpose hardware and/ or computer instructions. A step can be implemented in either software or hardware. Firmware implementations can be constructed with the algorithms embedded in processors such as Field Programmable Gate Arrays (FPGA), Application Specific Integrated Circuits (ASIC) and System on a Chip (SoC) embodiments.

The invention in all aspects in particular preferably relates to the detection of high-energy radiation such as ionising radiation, for example high-energy electromagnetic radiation such as x-rays and/or gamma rays, or subatomic particle radiation. Each of the plurality of detectors making up a detector system operated in accordance with the principles of the invention is preferably adapted correspondingly to detect such radiation. In particular preferably separate detectors are provided to detect soft x-rays and/or hard x-rays and/ or gamma rays.

The invention in all aspects relates to the combining of spectral data from a plurality of different radiation detectors, and in particular from a plurality of different detectors having different response functions.

The invention in particular preferably relates to the combining of spectral data from a detector with a relatively higher energy resolution and/ or a relatively lower absolute efficiency and a detector with a relatively lower energy resolution and/ or a relatively higher absolute efficiency. Hereinafter for convenience a detector of the former type is referred to as a detector of a first class and a detector of the latter type is referred to as a detector of a second class, but this reference is purely for ease of distinction of the two classes and no further meaning or limitation should be inferred. It would be equally valid to use the terms interchangeably. Hybrid detectors may include one or more detectors from first, second and further classes however defined having different energy resolutions and/ or of different efficiency.

The invention in particular preferably relates to the combining of spectral data from a hybrid detector system, for example comprising at least one detector of a first class having a relatively higher energy resolution and/ or a relatively lower absolute efficiency and at least one detector of a second class having a relatively lower energy resolution and/ or a relatively higher absolute efficiency.

A method in accordance with the principles of the invention is preferably applied to data from at least one detector of a first class having a relatively higher energy resolution and/ or a relatively lower absolute efficiency and at least one detector of a second class having a relatively lower energy resolution and/ or a relatively higher absolute efficiency. An apparatus in accordance with the principles of the invention preferably comprises at least one detector of a first class having a relatively higher energy resolution and/ or a relatively lower absolute efficiency and at least one detector of a second class having a relatively lower energy resolution and/ or a relatively higher absolute efficiency.

In particular, the invention applies to a method and apparatus for combining spectral data from at least one detector from a first class having a relatively higher energy resolution and a relatively lower absolute efficiency and at least one detector from a second class having a detector with a relatively lower energy resolution and a relatively higher absolute efficiency.

In such a method and apparatus, it may be possible for the perceived weaknesses of each class of detector, for example as regards any compromise between cost and size, between efficiency and energy resolution, etc, to be offset by their complementary strengths.

Plural detectors may be provided from each class, whether having the same or different energy resolution and/ or efficiency. Nor is the invention limited to cases where there are only two classes of detector. Multiple classes of detector each having different energy resolution and/ or efficiency may be employed in a method and apparatus of the invention.

Examples of detectors in the first class might include direct-conversion semiconductor detector devices (that is, detector devices that convert high-energy radiation such as high-energy photons into an electric charge directly within a detector element with no use of intermediate materials).

Examples of such direct-conversion semiconductor detector devices might include semiconductor detector devices with detector elements comprising a large direct band gap semiconductor material, for example a group II-VI semiconductor material such as cadmium telluride (CdTe), cadmium zinc telluride (CZT), cadmium manganese telluride (CMT) or the like, for example formed as a bulk single crystal (where bulk crystal in this context indicates a crystal thickness of at least 500 $\mu$m, and preferably of at least 1 mm).

Particularly preferably such semiconductor detector devices might have detector elements selected from cadmium telluride, cadmium zinc telluride (CZT), cadmium manganese telluride (CMT) and alloys thereof, and for example comprise crystalline $Cd_{1-(a+b)}Mn_aZn_bTe$ where a and/ or b may be zero. Combination of these and any other such materials may be considered which give spectroscopic detection rather than merely detecting amplitude of incident radiation monochromatically.

Examples of detectors in the second class might include indirect-conversion semiconductor detector devices such as scintillator detector devices (that is, detector devices that have a scintillator detector element that first converts high-energy radiation such as high-energy photons into lower energy photons and for example visible light which is then converted into an electric charge by means of secondary photodetector).

Examples of such indirect-conversion semiconductor detector devices might include devices with scintillator detector elements comprising organic or inorganic crystal scintillator detector elements. The invention is not limited to particular scintillator detector element compositions, but by way of example inorganic crystal scintillator detector elements selected from alkali metal halides such as optionally doped sodium iodide, cesium iodide, cesium fluoride, potassium iodide, lithium iodide and like materials, and for example will be familiar NaI(Tl), CsI(Tl) will be familiar.

Other examples in the second class might include semiconductor detector devices of similar material to the first class but of different thickness. If a similar material is used with substantially greater thickness the detector in the second class may have higher efficiency but lower resolution as a consequence of that greater thickness.

These are examples of classes of detector element which might meet the underlying condition that data is combined from at least two different types of detector. However the invention is not limited to application of the method to, or provision of an apparatus with, both direct and indirect detector devices. It merely requires a combination of spectral data from at least one detector having a relatively higher energy resolution and/ or a relatively lower absolute efficiency and at least one detector having a relatively lower energy resolution and/ or a relatively higher absolute efficiency. The principle could be applied for example to any combination of suitable direct-conversion solid state detectors and/ or indirect-conversion scintillator detectors in solid or liquid state and/ or gas-based detectors provided only that this condition is met. In particular therefore the principle could equally be applied to a combination of spectral data from plural different direct-conversion detectors alone or plural different indirect-conversion detectors alone or any combination of the same provided only that this condition is met.

The plurality of detectors may together cover and provide a detection capability for a broad spectrum of incident radiation over a range of energies, for example a broad spectrum of x-rays. At least some detectors may be adapted to exhibit a spectroscopically variable response across at least a part of such a broad spectrum allowing spectroscopic information to be retrieved and allowing intensity information to be detected at a plurality of differentiated energy bands across the spectrum of the source.

The invention in all aspects in particular preferably relates to the combining of spectral data from a plurality of different radiation detectors, and in particular from a plurality of different detectors having different response functions as above described, from collected emitted radiation data from an object under test where a spectral analysis of the emitted radiation is desirable. The invention as a result finds effective application in the testing of an object comprising an item for human consumption such as a food or drink item, to determine its contamination by radioactive material.

A strength of the invention, as above, can lie in its potential to identify particular isotopes from their characteristic spectra. Identification of particular contaminant isotopes in an item for human consumption such as a food or drink item can have additional value, for example in giving information about a source of the contamination, about a likely physiological effect of the contaminant etc.

In a possible case therefore, it follows that the method is a method of collecting and analysing emitted radiation data from an item for human consumption such as a food or drink item, and comprises the steps of:

>    providing a radiation detector system comprising a plurality of detectors;
>    positioning an item for human consumption such as a food or drink item relative to the radiation detector system in such arrangement that radiation emergent from the item is caused to be incident upon the plurality of detectors;
>    collecting data from radiation so incident at each detector and performing the analysis method hereinbefore described.

It correspondingly follows that the system is a system for a detector system for the processing of data derived from incident radiation comprises:

>    a plurality of separately addressable radiation detectors;
>    a test zone for receiving an item for human consumption such as a food or drink item in position relative to the radiation detector system in such arrangement that radiation emergent from the item is caused to be incident upon the plurality of detectors in use;
>    a processing device comprising a collection module as hereinbefore described, a deconvolution module as hereinbefore described, and optionally such other modules as hereinbefore described as may be appropriate.

However, application in the testing of an object comprising an item for human consumption such as a food or drink item, to determine its contamination by radioactive material, is merely an example. The invention is also applicable to any application described herein otherwise than that of testing of an object comprising an item for human consumption such as a food or drink item. Preferred features above described may be applicable in both cases.

The invention will now be described by way of example only by way of the foregoing example of a Bayesian deconvolution model and with reference to figures 1 to 5 of the accompanying drawings in which:

>    Figure 1 is a schematic diagram representing an embodiment of the system of the invention featuring multiple detectors of different type and having different response functions;
>    Figure 2 shows simulated responses for a hybrid CZT/ CsI detector system;
>    Figure 3 shows the effect of carrying out a Bayesian deconvolution (on the spectra in Figure 2;
>    Figure 4 shows a plot of efficiency versus data collection time when the acceptance ratio of the two detectors is 1:5;
>    Figure 5 shows for comparison a plot of efficiency versus data collection time when the acceptance ratio of the two detectors is 1:50.

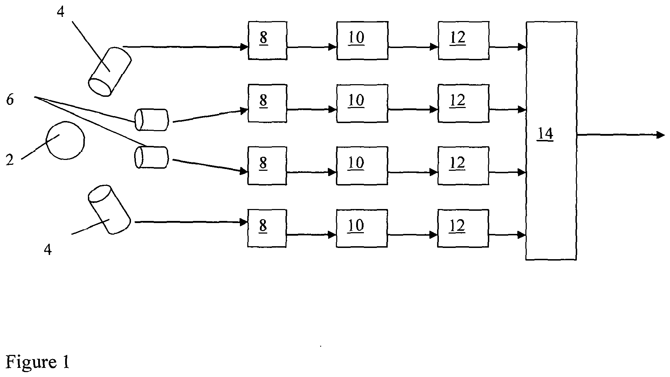

A simple schematic of an apparatus for performing the invention is illustrated in figure 1.

This embodiment depicts a source which is under observation (2) being detected by a hybrid system having multiple ionizing radiation detector elements of two respective types (4, 6).

The multiple detectors have known performance function. Some of the multiple detectors have high efficiency with low resolution (4) and some of the detectors have low efficiency with high resolution (6). Example high efficiency/ low resolution detectors might be NaI(TI), CsI(TI) scintillators. Example low efficiency/ high resolution detectors might be CdTe, CZT.

Each detector element (4, 6) collects incident radiation events in familiar manner and a spectral histogram for the collected data from each detector is produced. In the schematic of a typical arrangement shown for analogue pulse processing, each detector element sends its pulse output to suitable signal output processing electronics (8), for example including preamplifier/ amplifier. The processed signal feeds into an analogue to digital converter (ADC) (10) which in turn feeds a multichannel analyser (MCA) (12). The MCA outputs from each detector are subsequently fed to a central processor (14).

The processor (14) performs the novel processing steps to process a spectral histogram for the collected data from each detector by applying a Bayesian deconvolution to derive a single spectral histogram that representatively combines information from the plurality of detectors thereby to combine the multiple source data into a single final spectrum. The processor for example includes a module to collect data from radiation incident at each detector and produce a spectral histogram for the collected data from each detector and a module to deconvolve the histograms from each detector by applying a Bayesian deconvolution to derive a single spectral histogram that representatively combines information from the plurality of detectors. The process may be so constituted by any suitable combination of software/ firmware/ hardware.

A particular advantage of the invention is that the derived single spectral histogram can then be passed for standard spectral analysis or display.

It will be appreciated that although separate signal processing/ ADC/ MCA modules are shown in the schematic this is to illustrate the separate collection of spectra and does not require or imply discrete components. Likewise exemplification by analogue signal processing does not imply that a digital signal processing alternative could not be used.

An example of a process for combining spectra from multiple radiation detectors in accordance with an embodiment of the method of the invention is now described. This uses a CZT/ CsI hybrid model such as could be employed as the embedment of figure 1, and considers an example method for the numerical processing of the collected data and a presentation of some example results.

An example method of the invention expressed generally might be:

a) Use two or more spectroscopic detectors whose response functions are known and have for example previously been measured.

b) Collect spectral histograms from these detectors.

c) De-convolute these histograms using the algorithm described below to produce a single histogram that combines the information from all detectors.

d) Optionally display the single histogram.

e) Optionally compare the peaks in the single histogram with levels that define the statistical significance of their height relative to the continuum background.

f) Optionally integrate the area of peaks in the single histogram and use this as input to a calculation of source activity.

## SIMULATION

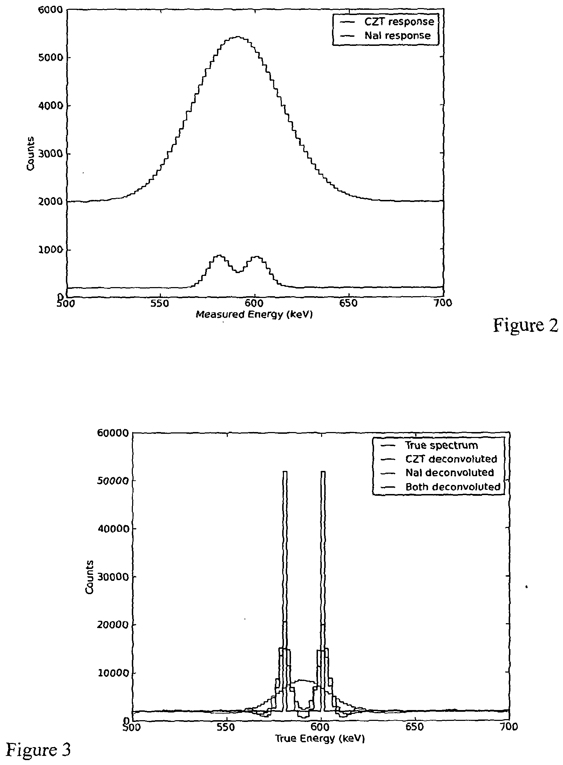

An example simulation is shown in Figures 2 and 3, made with an ideal simulation of two detectors labelled 'CZT' and 'NaI' that have very different resolutions (1% and 3.5%). The NaI detector has ten times greater efficiency than the CZT. The simulated spectrum is a flat continuum with two lines of equal intensity at 580 and 600 keV.

Figure 2 shows the simulated responses of the two detectors. It shows that only one peak is seen by the NaI because of its poor resolution, whereas the two peaks are partly resolved by the CZT.

Figure 3 shows the effect of carrying out a Bayesian deconvolution (200 iterations) on the spectra in Figure 2. The separate deconvolution of the individual CZT and NaI spectra is known from Kennett et al. and these curves are just shown for comparison. The point to note is that with a reasonable number of iterations the NaI response alone cannot be deconvoluted into separate peaks.

The invention is the deconvolution using both spectra together, for example using the algorithm described in further detail below. The point to note is that the joint deconvolution can distinguish the two separate lines (as can the CZT alone) but it also contains the statistical information about the source activity from the NaI spectrum.

## DISCUSSION OF DECONVOLUTION MODEL

### Model description

The model describes two detectors representing CZT and CsI labelled with subscripts $_{1,2}$ respectively. Each detector has a Gaussian resolution with width that is a percentage of the energy; $\sigma_1 = 2\%$ and $\sigma_2 = 7\%$. Each detector has an acceptance value which is the probability that a gamma from the source will be contained in that detector. Initially these acceptances were set to; $\varepsilon_1 = 0.02$ and $\varepsilon_2 = 0.1$.

Parameters common to both detectors are:

- A background rate Br is set at 10 gamma ray photons per second per keV interval.
- A line from the source which has energy 550 keV and rate Sr 100 /s.
- The simulated data capture time t; usually varied in a range up to 200 seconds.
- The energy range simulated is from 400 to 1000 keV but only the range from 460 to 940 keV is used in the analysis.

The background level is assumed to scale with its efficiency for seeing the source, so the number of background counts per keV interval in the CZT detector is $t \times Br \times \varepsilon_1$, while the total number of counts from the source in the same detector is $t \times Sr \times \varepsilon_1$ where these counts will be spread over several energy bins by the resolution.

Bayesian Deconvolution

Bayesian deconvolution is a method to iteratively approach a good estimate of a true spectrum, based on a measurement that is influenced by known systematic distortions and unknown random noise. In general the measurement process can be described by

$$M(E'_k) = \sum_i R(E'_k, E_i).T(E_i) + N(E'_k) \qquad (1)$$

where M is the measured spectrum, T is the true spectrum, R is the response matrix that describes the known systematic distortions of the measurement, and N is the noise. In the model below the assumption is made that the only noise is Poisson statistical fluctuations.

If there was no noise and the number of measurement bins was chosen to be equal to the number of bins in the true spectrum then this equation could be exactly solved for T by finding the inverse of the response matrix, $R^{-1}$ and applying it to the measured spectrum. However, if there is even a moderate amount of noise in the measurement then this solution falls down; the noise is amplified and the resulting 'true' spectrum has very large bin-to-bin fluctuations and some bins can even be negative.

A better solution is to use an approach based on Bayes' theorem which has the desirable properties that it is less sensitive to noise and the 'true' spectrum that it yields is guaranteed to be positive in all bins. The method involves choosing a first estimate of the true spectrum and using it as the prior function in Bayes' theorem to yield an improved estimate of the true spectrum, which is then fed back as the new prior in the next iteration. The resulting equation is;

$$T_i^{n+1} = \frac{1}{\varepsilon_i} T_i^n \sum_k \frac{R_{ki} M_k}{\sum_j R_{kj} T_j^n} \qquad (2)$$

Where the terms have the same meanings as equation 1 and the superscript on T refers to the iteration number. The reasonableness of this equation can be seen if one notes that the denominator is equal to the expected number of events, $E_k^n$, that would are predicted in measurement bin $k$ given the truth spectrum of iteration $n$ and no noise;

$$E_k^n = \sum_j R_{kj} T_j^n \qquad (3)$$

Furthermore, $R_{ki}/\varepsilon_i$ is a set of weights summing to 1 that link measurement bin $k$ with truth bin $i$. So, on each iteration $T_i$ is multiplied by the factor $F_i^n$;

$$F_i^n = \sum_k \frac{R_{ki}}{\varepsilon_i} \frac{M_k}{E_k^n} \qquad (4)$$

This factor $F_i^n$ will be greater than one if the measurements in bins linked to $i$ are generally above expectation and it will be less than one if measurements in the linked bins are generally less than expectation.

Equation (2) was derived by Kennett et al (NIM 151 (1978) 285-292). The normalisation factor, $\varepsilon_i = \sum_k R_{ki}$, was not included by Kennett et al because they defined $R_{ki}$ in such a way that it summed to one. The convergence properties, noise properties and implementation of this algorithm on a computer were investigated by Kennett et al in the late 1970s and this method has been used by other workers since.

Extension to the case of two or more detectors

The model applied in accordance with the method of the invention extends this formalism to the case of two or more detectors, which may have very different response functions, by extending the meaning of index $k$ in equation (2). Conventionally $k$ is supposed to denote a set of energy measurement bins of a single detector. But we use one part of the range of $k$ to denote measurements in one detector and another part of the $k$ range to denote measurements in a different detector. For example suppose there are two detectors and the set of indices $k$ is divided into two parts labelled $a$ and $b$ relating to the two detectors, then equation (4) can be re-written as;

$$F_i^n = \sum_a \frac{R_{ai}}{\varepsilon_i} \frac{M_a}{E_a^n} + \sum_b \frac{R_{bi}}{\varepsilon_i} \frac{M_b}{E_b^n} \qquad (5)$$

The epsilon term can also be separated between the two detectors so that

$$\varepsilon_i^A = \sum_a R_{ai} \;, \qquad \varepsilon_i^B = \sum_b R_{bi} \qquad \text{and} \qquad \varepsilon_i = \varepsilon_i^A + \varepsilon_i^B \qquad (6)$$

where we have capitalised the A to indicate that it is no longer an index for summation. Finally, substituting equation (6) into (5) and rearranging gives

$$F_i^n = F_i^{An} \frac{\varepsilon_i^A}{\varepsilon_i^A + \varepsilon_i^B} + F_i^{Bn} \frac{\varepsilon_i^B}{\varepsilon_i^A + \varepsilon_i^B} \qquad (7)$$

Where $F_i^{An}$ is defined exactly as in equation (4) and the superscript A is reminding us that we are considering only detector A.

Equation (7) tells us that when we wish to carry out a Bayesian deconvolution of the spectra from multiple detectors measuring the same source, we should do so by calculating the iteration factors $F$ for each detector individually and then combining the F factors using weights built up from the epsilons of each individual detector to produce a joint $F$ value that represents the hybrid system. Since equation (7) is derived rigorously from the much studied equation (2) a method based on equation (7) may exploit the known benefits of optimal information use, convergence, noise immunity and reasonableness that come with the Bayesian deconvolution method.

Fundamentally, the Bayesian method involves choosing a first estimate of the spectrum for each detector and using it as the prior function in Bayes' theorem to yield an improved estimate of the true spectrum. In a particular implementation, a response matrix is obtained for each detector, and the respective detector response matrices are used to derive the priors. They may be used to derive the prior directly for example by being applied directly for example as a weighting factor, or they may be used to derive the prior otherwise indirectly.

Simulation

A single 'experiment' consists of generating a spectrum with Poisson fluctuations in both detectors. The spectra are then analysed with the Bayes deconvolution fit to extract lines. The analysis may use either detector alone or combine the information from the two. Success is defined as finding a line within $\pm 15$ keV of the position of the input line. A false positive is defined as when the input line intensity is set to zero but a line is found at the correct position anyway because of background fluctuations.

A series of 100 experiments with source switched off are used to find the threshold setting that will give a 1% false positive rate. The lines used to measure the false positive rate are in the fiducial range 460-940 keV and it is assumed that the false positive peaks are equally likely to be anywhere in this range. So this threshold setting procedure consists of choosing the $100 \times 1\% \times (480 \text{ keV})/(30 \text{ keV}) = 16^{\text{th}}$ highest peak from these 100 experiments and using it as the threshold level. Finally a series of 100 experiments using the chosen threshold and with lines switched on gives the efficiency.

Results

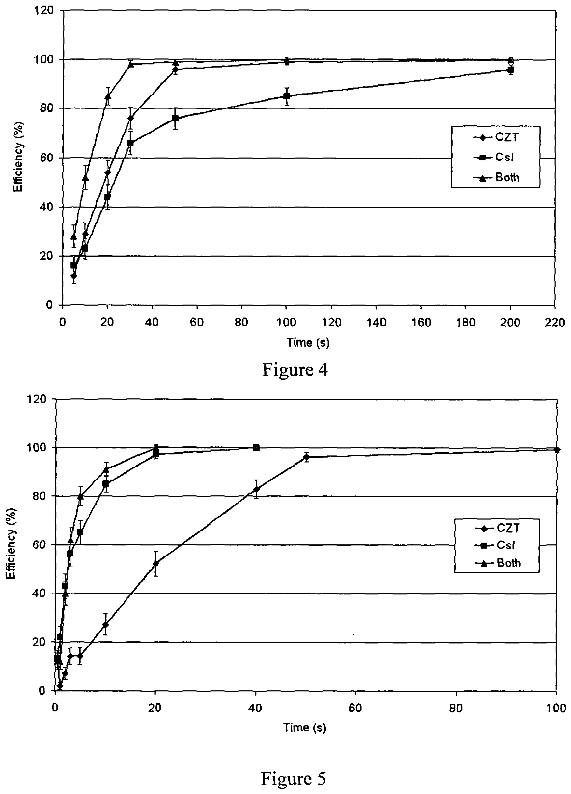

Figure 4 shows the efficiency versus data collection time when the acceptance ratio of the two detectors is 1:5. The CZT alone is somewhat more efficient than the CsI alone but the best efficiency comes from combing data from both detectors.

If we now increase the acceptance of the CsI to give an acceptance ratio of 1:50 we get the results shown in Figure 5. The CsI now has such high acceptance that it performs much better than the CZT but the combined analysis still benefits from the presence of the CZT.

It is thus illustrated that application of this model after a number of iterations of the algorithm described above it is possible to obtain a more representative solution for the truth distribution Ti. It may be suggested that this truth distribution contains the optimum combination of information from the two detectors, assuming no prior knowledge about the truth spectrum.

In accordance with the model a method is offered for the convolved processing of spectral data from a plurality of radiation detectors with at least two different known response properties, and in particular from a plurality of radiation detectors having at least two different energy resolutions and/ or of different efficiency that extracts data more effectively than would be possible by analysis of the spectra separately and that more effectively exploits the complementary spectral data content provided by the at least two different detector responses.

**Claims**

1. A method for the combined processing of spectral data from a plurality of radiation detectors (4, 6) having at least two different response properties, comprising:

   obtaining a response matrix for each detector;
   collecting data from radiation incident at each detector;
   producing a spectral histogram for the collected data from each detector;
   deconvoluting the histograms from each detector by applying a numerical deconvolution that makes use of the response matrix for each detector to derive a single spectral histogram that representatively combines information from the plurality of detectors;
   **characterised in that** the numerical deconvolution is a Bayesian deconvolution.

2. The method of claim 1 applied to the processing of data from a detector system comprising at least one detector (4) of a first class having a relatively higher energy resolution and/ or a relatively lower absolute efficiency and at least one detector (6) of a second class having a relatively lower energy resolution and/ or a relatively higher absolute efficiency.

3. The method of any preceding claim wherein the step of applying a numerical deconvolution comprises a deconvolution step performed repeatedly and successively in iterative manner with respect to data from the radiation detectors (4, 6) having at least two different response properties to approach in iterative manner a derived spectrum more representative of a nominal true spectrum than that which would be derived from a single detector response.

4. The method of any preceding claim comprising in an initial step obtaining a response matrix for each detector, and in a deconvolution step deconvoluting the histograms from each detector by applying a Bayesian deconvolution which makes use of the respective detector response matrices to derive the prior for the Bayesian deconvolution.

5. The method of any preceding claim wherein the step of applying a Bayesian deconvolution comprises applying the numerical relationship:

$$T_i^{n+1} = \frac{1}{\varepsilon_i} T_i^n \sum_k \frac{R_{ki} M_k}{\sum_j R_{kj} T_j^n}$$

where M is the measured spectrum, T is the true spectrum, and R is the response matrix that describes the known systematic distortions of the measurement.

6. The method of any preceding claim wherein the respective detector response matrices are simulated by a Monte Carlo simulation.

7. The method of any preceding claim wherein a previously obtained response matrix is stored for subsequent use in a deconvolution step of the method applied to subsequently collected data.

8. The method of any preceding claim wherein a response matrix is generated as an initial step of each implementation of the method.

9. A method of collecting and analysing emitted radiation data from an object under test, comprising the steps of:

   providing a radiation detector system comprising a plurality of detectors (4, 6) having at least two different response properties;
   positioning an object (2) relative to the radiation detector system in such arrangement that radiation emergent from the object is caused to be incident upon the plurality of detectors (4, 6);
   collecting data from radiation so incident at each detector; and
   processing the data in accordance with the method of any preceding claim.

10. The method of claim 9 comprising in an initial step obtaining a response matrix for each detector, and in a deconvolution step deconvoluting the histograms from each detector by applying a Bayesian deconvolution which makes use of the respective detector response matrices.

11. A detector system for the processing of data derived from incident radiation comprising:

   a plurality of separately addressable radiation detectors (4, 6);
   a processing device (8, 10, 12, 14) comprising:

      a collection module to collect data from radiation incident at each detector and produce a spectral histogram for the collected data from each detector;
      a deconvolution module to deconvolve the histograms from each detector by applying a numerical deconvolution that makes use of a response matrix for each detector to derive a single spectral histogram that representatively combines information from the plurality of detectors;
      **characterised in that** the plurality of separately addressable radiation detectors have at least two different response properties, and **in that** the deconvolution module is adapted to apply a Bayesian deconvolution.

12. A detector system in accordance with claim 11 wherein the processing device further comprises:

   a module to derive and/ or store a response matrix for each detector;
   a data link to enable the convolution module to apply the derived and/ or
   stored response matrix to be applied in the deconvolution step to derive a single spectral histogram that representatively combines information from the plurality of detectors.

13. A detector system in accordance with claim 12 wherein the response matrix module is adapted to derive a response matrix for each detector by a Monte Carlo simulation.

14. A detector system in accordance with claim 12 or 13 wherein the processing device is adapted to derive a prior for a Bayesian deconvolution from the respective detector response matrices.

15. A detector system in accordance with one of claims 11 to 14 comprising at least one detector (4) of a first class having a relatively higher energy resolution and/ or a relatively lower absolute efficiency and at least one detector (6) of a second class having a relatively lower energy resolution and/ or a relatively higher absolute efficiency.

16. A detector system in accordance with claim 15 wherein a detector (4) from a first class comprises a direct-conversion semiconductor detector device comprising crystalline $Cd_{1-(a+b)}Mn_aZn_bTe$ where a and/ or b may be zero.

17. A detector system in accordance with one of claims 15 or 16 wherein a detector (6) from the second class comprises an indirect-conversion scintillator semiconductor detector device.

18. A computer program product comprising, on a computer readable medium or a suitably programmed programmable data processing apparatus, a series of program instructions to execute a series of method steps for the combined processing of spectral data from a plurality of radiation detectors (4, 6) having at least two different response properties, the method steps comprising:

   producing a spectral histogram for incident radiation data collected from each of the plurality of radiation detectors;
deconvoluting the histograms from each detector by applying a numerical deconvolution that makes use of a response matrix for each detector to derive a single spectral histogram that representatively combines information from the plurality of detectors,
**characterised in that** the numerical deconvolution is a Bayesian deconvolution.

**Patentansprüche**

1. Ein Verfahren für das kombinierte Verarbeiten von Spektraldaten von einer Vielzahl von Strahlungsdetektoren (4, 6) mit mindestens zwei unterschiedlichen Antworteigenschaften, das Folgendes beinhaltet:

   Erhalten einer Antwortmatrix für jeden Detektor;
   Sammeln von Daten aus an jedem Detektor einfallender Strahlung;
   Erzeugen eines Spektralhistogramms für die gesammelten Daten von jedem Detektor;
   Dekonvolutieren der Histogramme von jedem Detektor durch das Anwenden einer numerischen Dekonvolution, welche die Antwortmatrix für jeden Detektor verwendet, um ein einzelnes Spektralhistogramm abzuleiten, das Informationen von der Vielzahl von Detektoren repräsentativ kombiniert;
   **dadurch gekennzeichnet, dass** die numerische Dekonvolution eine bayessche Dekonvolution ist.

2. Verfahren gemäß Anspruch 1, angewendet auf das Verarbeiten von Daten von einem Detektorsystem, beinhaltend mindestens einen Detektor (4) einer ersten Klasse mit einer relativ höheren Energieauflösung und/oder einem relativ geringeren absoluten Wirkungsgrad und mindestens einen Detektor (6) einer zweiten Klasse mit einer relativ geringeren Energieauflösung und/oder einem relativ höheren absoluten Wirkungsgrad.

3. Verfahren gemäß einem der vorhergehenden Ansprüche, wobei der Schritt des Anwendens einer numerischen Dekonvolution einen Dekonvolutionsschritt beinhaltet, der wiederholt und sukzessiv auf iterative Weise mit Bezug auf Daten von den Strahlungsdetektoren (4, 6) mit mindestens zwei unterschiedlichen Antworteigenschaften durchgeführt wird, um sich auf iterative Weise einem abgeleiteten Spektrum anzunähern, das für ein nominales wahres Spektrum repräsentativer ist als eines, das aus einer einzelnen Detektorantwort abgeleitet würde.

4. Verfahren gemäß einem der vorhergehenden Ansprüche, beinhaltend in einem ersten Schritt das Erhalten einer Antwortmatrix für jeden Detektor und in einem Dekonvolutionsschritt das Dekonvolutieren der Histogramme von jedem Detektor durch das Anwenden einer bayesschen Dekonvolution, die die entsprechenden Detektorantwortmatrizen zum Ableiten der A-priori-Wahrscheinlichkeit für die bayessche Dekonvolution verwendet.

5. Verfahren gemäß einem der vorhergehenden Ansprüche, wobei der Schritt des Anwendens einer bayesschen Dekonvolution das Anwenden der numerischen

$$T_i^{n+1} = \frac{1}{\varepsilon_i} T_i^n \sum_k \frac{R_{ki} M_k}{\sum_j R_{kj} T_j^n}$$

wobei M das gemessene Spektrum ist, T das wahre Spektrum ist und R die Antwortmatrix ist, die die bekannten systematischen Verzerrungen der Messung beschreibt.

6. Verfahren gemäß einem der vorhergehenden Ansprüche, wobei die entsprechenden Detektorantwortmatrizen durch eine Monte-Carlo-Simulation simuliert werden.

7. Verfahren gemäß einem der vorhergehenden Ansprüche, wobei eine zuvor erhaltene Antwortmatrix zur nachfolgenden Verwendung in einem Dekonvolutionsschritt des Verfahrens, angewendet auf nachfolgend gesammelte Daten, gespeichert wird.

8. Verfahren gemäß einem der vorhergehenden Ansprüche, wobei als ein erster Schritt jeder Implementierung des Verfahrens eine Antwortmatrix generiert wird.

9. Ein Verfahren zum Sammeln und Analysieren abgegebener Strahlungsdaten von einem Testobjekt, beinhaltend die folgenden Schritte:

   Bereitstellen eines Strahlungsdetektorsystems, das eine Vielzahl von Detektoren (4, 6) mit mindestens zwei unterschiedlichen Antworteigenschaften beinhaltet;
   Positionieren eines Objekts (2) relativ zu dem Strahlungsdetektorsystem in einer derartigen Anordnung, dass bewirkt wird, dass von dem Objekt ausgehende Strahlung auf die Vielzahl von Detektoren (4, 6) einfällt;
   Sammeln von Daten von so an jedem Detektor einfallender Strahlung; und
   Verarbeiten der Daten gemäß dem Verfahren gemäß einem der vorhergehenden Ansprüche.

10. Verfahren gemäß Anspruch 9, beinhaltend in einem ersten Schritt das Erhalten einer Antwortmatrix für jeden Detektor und in einem Dekonvolutionsschritt das Dekonvolutieren der Histogramme von jedem Detektor durch das Anwenden einer bayesschen Dekonvolution, die die entsprechenden Detektorantwortmatrizen verwendet.

11. Ein Detektorsystem für die Verarbeitung von aus einfallender Strahlung abgeleiteten Daten, das Folgendes beinhaltet:

   eine Vielzahl von separat adressierbaren Strahlungsdetektoren (4, 6);
   eine Verarbeitungsvorrichtung (8, 10, 12, 14), die Folgendes beinhaltet:

   ein Sammelmodul zum Sammeln von Daten aus an jedem Detektor einfallender Strahlung und Erzeugen eines Spektralhistogramms für die gesammelten Daten von jedem Detektor;
   ein Dekonvolutionsmodul zum Dekonvolutieren der Histogramme von jedem Detektor durch das Anwenden einer numerischen Dekonvolution, welche eine Antwortmatrix für jeden Detektor verwendet, um ein einzelnes Spektralhistogramm abzuleiten, das Informationen von der Vielzahl von Detektoren repräsentativ kombiniert;
   **dadurch gekennzeichnet, dass** die Vielzahl von separat adressierbaren Strahlungsdetektoren mindestens zwei unterschiedliche Antworteigenschaften aufweist und dass das Dekonvolutionsmodul angepasst ist, um eine bayessche Dekonvolution anzuwenden.

12. Detektorsystem gemäß Anspruch 11, wobei die Verarbeitungsvorrichtung ferner Folgendes beinhaltet:

   ein Modul zum Ableiten und/oder Speichern einer Antwortmatrix für jeden Detektor;
   eine Datenverknüpfung, um dem Konvolutionsmodul zu ermöglichen, die abgeleitete und/oder gespeicherte Antwortmatrix, welche in dem Dekonvolutionsschritt angewendet werden soll, anzuwenden, um ein einzelnes Spektralhistogramm abzuleiten, das Informationen von der Vielzahl von Detektoren repräsentativ kombiniert.

13. Detektorsystem gemäß Anspruch 12, wobei das Antwortmatrixmodul angepasst ist, um eine Antwortmatrix für jeden Detektor durch eine Monte-Carlo-Simulation abzuleiten.

14. Detektorsystem gemäß Anspruch 12 oder 13, wobei die Verarbeitungsvorrichtung angepasst ist, um eine A-priori-Wahrscheinlichkeit für eine bayessche Dekonvolution aus den entsprechenden Detektorantwortmatrizen abzuleiten.

15. Detektorsystem gemäß einem der Ansprüche 11 bis 14, beinhaltend mindestens einen Detektor (4) einer ersten Klasse mit einer relativ höheren Energieauflösung und/oder einem relativ geringeren absoluten Wirkungsgrad und mindestens einen Detektor (6) einer zweiten Klasse mit einer relativ geringeren Energieauflösung und/oder einem relativ höheren absoluten Wirkungsgrad.

16. Detektorsystem gemäß Anspruch 15, wobei ein Detektor (4) von einer ersten Klasse eine Halbleiterdetektorvorrichtung mit direkter Umwandlung, beinhaltend kristallines $Cd_{1-(a+b)}Mn_aZn_bTe$, wobei a und/oder b null sein können, beinhaltet.

17. Detektorsystem gemäß einem der Ansprüche 15 oder 16, wobei ein Detektor (6) von der zweiten Klasse eine Szintillatorhalbleiterdetektorvorrichtung mit indirekter Umwandlung beinhaltet.

18. Ein Computerprogrammprodukt, beinhaltend auf einem computerlesbaren Medium oder einem entsprechend programmierten programmierbaren Datenverarbeitungsgerät eine Reihe von Programmanweisungen zum Ausführen einer Reihe von Verfahrensschritten für das kombinierte Verarbeiten von Spektraldaten von einer Vielzahl von Strahlungsdetektoren (4, 6) mit mindestens zwei unterschiedlichen Antworteigenschaften, wobei die Verfahrensschritte Folgendes beinhalten:

Erzeugen eines Spektralhistogramms für einfallende Strahlungsdaten, die von jedem der Vielzahl von Strahlungsdetektoren gesammelt werden;

Dekonvolutieren der Histogramme von jedem Detektor durch das Anwenden einer numerischen Dekonvolution, welche eine Antwortmatrix für jeden Detektor verwendet,

um ein einzelnes Spektralhistogramm abzuleiten, das Informationen von der Vielzahl von Detektoren repräsentativ kombiniert,

**dadurch gekennzeichnet, dass** die numerische Dekonvolution eine bayessche Dekonvolution ist.

## Revendications

1. Une méthode pour le traitement combiné de données spectrales provenant d'une pluralité de détecteurs de rayonnement (4, 6) présentant au moins deux propriétés différentes de réponse, comprenant :

l'obtention d'une matrice de réponse pour chaque détecteur ;

la collecte de données provenant d'un rayonnement incident au niveau de chaque détecteur ;

la production d'un histogramme spectral pour les données collectées provenant de chaque détecteur ;

la déconvolution des histogrammes provenant de chaque détecteur par l'application d'une déconvolution numérique qui se sert de la matrice de réponse pour chaque détecteur afin de dériver un unique histogramme spectral qui combine de façon représentative des informations provenant de la pluralité de détecteurs ;

**caractérisée en ce que** la déconvolution numérique est une déconvolution bayésienne.

2. La méthode de la revendication 1 appliquée au traitement de données provenant d'un système de détecteurs comprenant au moins un détecteur (4) d'une première classe présentant une résolution énergétique relativement plus élevée et/ou une efficacité absolue relativement plus basse et au moins un détecteur (6) d'une deuxième classe présentant une résolution énergétique relativement plus basse et/ou une efficacité absolue relativement plus élevée.

3. La méthode de n'importe quelle revendication précédente où l'étape d'application d'une déconvolution numérique comprend une étape de déconvolution réalisée de façon répétée et successive de manière itérative en ce qui concerne des données provenant des détecteurs de rayonnement (4, 6) présentant au moins deux propriétés différentes de réponse pour approcher de manière itérative un spectre dérivé plus représentatif d'un véritable spectre nominal que celui qui serait dérivé de la réponse d'un unique détecteur.

4. La méthode de n'importe quelle revendication précédente comprenant dans une étape initiale l'obtention d'une matrice de réponse pour chaque détecteur, et dans une étape de déconvolution la déconvolution des histogrammes provenant de chaque détecteur par l'application d'une déconvolution bayésienne qui se sert des matrices de réponse de détecteurs respectifs afin de dériver l'a priori pour la déconvolution bayésienne.

5. La méthode de n'importe quelle revendication précédente où l'étape d'application d'une déconvolution bayésienne comprend l'application de la relation numérique :

$$T_i^{n+1} = \frac{1}{\varepsilon_i} T_i^n \sum_k \frac{R_{ki} M_k}{\sum_j R_{kj} T_j^n}$$

où M est le spectre mesuré, T est le véritable spectre, et R est la matrice de réponse qui décrit les distorsions systématiques connues de la mesure.

6. La méthode de n'importe quelle revendication précédente où les matrices de réponse de détecteurs respectifs sont simulées par une simulation de Monte-Carlo.

7. La méthode de n'importe quelle revendication précédente où une matrice de réponse précédemment obtenue est stockée pour un usage ultérieur dans une étape de déconvolution de la méthode appliquée à des données collectées ultérieurement.

8. La méthode de n'importe quelle revendication précédente où une matrice de réponse est générée comme une étape initiale de chaque implémentation de la méthode.

9. Une méthode de collecte et d'analyse de données de rayonnement émis provenant d'un objet soumis au test, comprenant les étapes consistant à :

fournir un système de détecteurs de rayonnement comprenant une pluralité de détecteurs (4, 6) présentant au moins deux propriétés différentes de réponse ;
positionner un objet (2) par rapport au système de détecteurs de rayonnement dans une disposition telle que le rayonnement émanant de l'objet soit amené à être incident sur la pluralité de détecteurs (4, 6) ;
collecter des données provenant d'un rayonnement ainsi incident au niveau de chaque détecteur ; et
traiter les données selon la méthode de n'importe quelle revendication précédente.

10. La méthode de la revendication 9 comprenant dans une étape initiale l'obtention d'une matrice de réponse pour chaque détecteur, et dans une étape de déconvolution la déconvolution des histogrammes provenant de chaque détecteur par l'application d'une déconvolution bayésienne qui se sert des matrices de réponse de détecteurs respectifs.

11. Un système de détecteurs pour le traitement de données dérivées d'un rayonnement incident comprenant :

une pluralité de détecteurs de rayonnement adressables séparément (4, 6) ;
un dispositif de traitement (8, 10, 12, 14) comprenant :

un module de collecte pour collecter des données provenant d'un rayonnement incident au niveau de chaque détecteur et produire un histogramme spectral pour les données collectées provenant de chaque détecteur ;
un module de déconvolution pour déconvoluer les histogrammes provenant de chaque détecteur par l'application d'une déconvolution numérique qui se sert d'une matrice de réponse pour chaque détecteur pour dériver un unique histogramme spectral qui combine de façon représentative des informations provenant de la pluralité de détecteurs ;
**caractérisé en ce que** la pluralité de détecteurs de rayonnement adressables séparément présentent au moins deux propriétés différentes de réponse, et **en ce que** le module de déconvolution est conçu pour appliquer une déconvolution bayésienne.

12. Un système de détecteurs selon la revendication 11 où le dispositif de traitement comprend en outre :

un module pour dériver et/ou stocker une matrice de réponse pour chaque détecteur ;
une liaison de données pour permettre au module de convolution d'appliquer la matrice de réponse dérivée et/ou stockée devant être appliquée dans l'étape de déconvolution pour dériver un unique histogramme spectral qui combine de façon représentative des informations provenant de la pluralité de détecteurs.

13. Un système de détecteurs selon la revendication 12 où le module de matrices de réponse est conçu pour dériver une matrice de réponse pour chaque détecteur au moyen d'une simulation de Monte-Carlo.

14. Un système de détecteurs selon la revendication 12 ou la revendication 13 où le dispositif de traitement est conçu pour dériver un a priori pour une déconvolution bayésienne à partir des matrices de réponse de détecteurs respectifs.

15. Un système de détecteurs selon l'une des revendications 11 à 14 comprenant au moins un détecteur (4) d'une première classe présentant une résolution énergétique relativement plus élevée et/ou une efficacité absolue relativement plus basse et au moins un détecteur (6) d'une deuxième classe présentant une résolution énergétique relativement plus basse et/ou une efficacité absolue relativement plus élevée.

16. Un système de détecteurs selon la revendication 15 où un détecteur (4) d'une première classe comprend un dispositif de détecteurs semi-conducteurs à conversion directe comprenant du $Cd_{1-(a+b)}Mn_aZn_bTe$ cristallin où a et/ou b peuvent être zéro.

**17.** Un système de détecteurs selon l'une des revendications 15 ou 16 où un détecteur (6) d'une deuxième classe comprend un dispositif de détecteurs semi-conducteurs scintillateurs à conversion indirecte.

**18.** Un produit de programme informatique comprenant, sur un support lisible par ordinateur ou un appareil programmable de traitement de données programmé de manière appropriée, une série d'instructions de programme pour exécuter une série d'étapes de la méthode pour le traitement combiné de données spectrales provenant d'une pluralité de détecteurs de rayonnement (4, 6) présentant au moins deux propriétés différentes de réponse, les étapes de la méthode comprenant :

la production d'un histogramme spectral pour des données de rayonnement incident collectées provenant de chacun de la pluralité de détecteurs de rayonnement ;
la déconvolution des histogrammes provenant de chaque détecteur par l'application d'une déconvolution numérique qui se sert d'une matrice de réponse pour chaque détecteur afin de dériver un unique histogramme spectral qui combine de façon représentative des informations provenant de la pluralité de détecteurs,
**caractérisé en ce que** la déconvolution numérique est une déconvolution bayésienne.

Figure 1

Figure 2

Figure 3

Figure 4

Figure 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009082587 A

**Non-patent literature cited in the description**

- EXACT DECONVOLUTION FOR MULTIPLE CONVOLUTION OPERATORS-AN OVERVIEW, PLUS PERFORMANCE CHARACTERIZATIONS FOR IMAGING SENSORS. **BERENSTEIN C et al.** PROCEEDINGS OF THE IEEE. IEEE, 01 April 1990, vol. 78, 723-734
- Bayesian techniques and the principle of maximum entropy in ion-beam analysis applications. **WELLER R et al.** NUCLEAR INSTRUMENTS & METHODS IN PHYSICS RESEARCH, SECTION - B: BEAM INTERACTIONS WITH MATERIALS AND ATOMS. ELSEVIER, 01 March 1998, vol. 136-138, 1146-1151
- Semi-Analytical Response Function for ML-EM Deconvolution of NaI Detector Energy Spectra. **ENGDAHL J C et al.** NUCLEAR SCIENCE SYMPOSIUM CONFERENCE RECORD, 2005 IEEE WYNDHAM EL CONQUISTADOR RESORT. IEEE, 23 October 2005, vol. 3, 1346-1350
- Maximum likelihood estimation maximization deconvolution in spatial and combined spatial energy domains for a detector array system. **WEIYI WANG et al.** NUCLEAR SCIENCE SYMPOSIUM CONFERENCE RECORD, 2007. NSS '07. IEEE. IEEE, 1965-1970
- **KENNETT et al.** *NIM,* 1978, vol. 151, 285-292